# EUROPEAN PATENT APPLICATION

(11) **EP 4 715 883 A1**
(43) Date of publication of application: **25.03.2026**
(21) Application number: 25203253.7
(22) Date of filing: 19.09.2025
(51) Int. Cl.: H01M 4/04, H01M 4/136, H01M 4/139, H01M 10/052, H01M 4/62, H01M 4/36, H01M 4/38, H01M 10/0565

(54) **COATING MATERIAL FOR ELECTRODES**

(30) Priority: 20.09.2024 EP 24383011
(71) Applicant: Basquevolt S.A.U., 01510 Vitoria-Gasteiz, Álava (ES)
(72) Inventor: BERTOLI, Luca, E-01510 Vitoria-Gasteiz, Álava (ES); MOHAMMADI, Abdolkhaled, E-01510 Vitoria-Gasteiz, Álava (ES); CHAKRABORTY, Saheli, E-01510 Vitoria-Gasteiz, Álava (ES); WIZNER, Agnieszka, E-01510 Vitoria-Gasteiz, Álava (ES); PISZCZ, Micha, E-01510 Vitoria-Gasteiz, Álava (ES); GIORDANI, Vincent, E-01510 Vitoria-Gasteiz, Álava (ES); CASTILLO RUIZ DE AZÚA, Julen, E-01510 Vitoria-Gasteiz, Álava (ES); RIKARTE ORMAZABAL, Jokin, E-01510 Vitoria-Gasteiz, Álava (ES)
(74) Representative: ABG Intellectual Property Law, S.L.

(57) **Abstract**

The present invention discloses methods for coating electrodes, particularly anodes, more particularly lithium anodes in batteries. The invention also describes the coating material obtained by said methods, which involves the ring-opening polymerization of dioxolane (DOL) monomers in presence of suitable polymerization initiators, crosslinkers and optional further additives. The so-obtained coating material displays advantageous features such as fast lithium ions diffusion and high conductivity, high elastic modulus blocking dendrite formation, high flexibility, scalability, controllable thickness of the coating material and homogeneity on the anode surface. Lastly, the present invention describes the corresponding electrochemical cells and/or batteries comprising said coating material, which are characterized by improved stability during the cell/battery cycling.

## Description

### FIELD OF THE INVENTION

The present invention relates to methods for coating electrodes, particularly anodes, more particularly lithium anodes of lithium batteries. The invention also describes the coating material obtained by said methods and polymerizable mixture leading to the coating material. Lastly, the corresponding electrochemical cells and/or batteries comprising said coating material are characterized by improved stability during the cell/battery cycling.

### BACKGROUND

The safety, performance, and lifespan of lithium anodes is negatively affected by dendrite formation, side reactions, poor mechanical stability, and unefficient ion transport. In order to improve the durability and extend the performance of lithium anodes, several strategies have been adopted.

One strategy is electrolyte engineering (L. Li et al., Nanoselect, 2021, vol. 2, issue 1, 16-36, doi: 10.1002/nano.202000164), as the electrolyte formulation plays a key role in stabilizing lithium metal anodes and enhancing cycle life. Additives like fluoroethylene carbonate (FEC), lithium bis(fluorosulfonyl)imide (LiFSI), or lithium difluoro(oxalato)borate (LiDFOB) can promote the formation of a stable SEI, reduce side reactions, and improve cycling stability. Solid-state electrolytes, such as ceramics or solid polymers, may also be employed. Additional, a high-concentration or localized high-concentration electrolytes can improve lithium-ion transport and reduce unwanted side reactions.

Another strategy for lithium protection relies on the formation of 3D (e.g., carbon scaffolds or metallic frameworks) or composite (e.g. incorporating conductive materials like copper or nickel) host structures for lithium. Closely related to the use of host structures is the encapsulation of lithium anodes with flexible or ion-conductive protective layers preventing direct contact between the anode and the electrolyte.

Coating layers for lithium anodes are also known in surface engineering to protect lithium metal from degradation and side reactions (H. Zhou, Journal of Power Sources, 2020, Vol. 450, 227632, doi: 10.1016/j.jpowsour.2019.227632). For example a thin, uniform coating (e.g., ceramic materials like LiF or Li₃N; J. Lang et al., Energy Storage Materials 2019, Vol. 16, 85-90, doi: 10.1016/j.ensm.2018.04.024) on the lithium anode surface can prevent dendrites by providing a physical barrier and ensuring more uniform lithium deposition. Creating a stable artificial SEI layer with materials such as polymers, inorganic compounds, or composites can also help control lithium-ion flux and prevent uneven lithium deposition. Nanoscale layers of materials (e.g., carbon, ceramics, or hybrid materials) may be suitable materials as protecting layers. Nevertheless, the main drawback of state-of- art coating layers for anodes, particularly for lithium-metal batteries, is maintaining stability and functionality over long cycles.

Some poly(1,3-dioxolane) (PDOL) electrolytes have recently proven promising according to the electrolyte engineering strategy discussed above (H. Yang et al., Nano-Micro Lett., (2024) 16:127, doi: 10.1007/s40820-024-01354-z). For example, G.Yang et al. (EcoMat. 2023;5:e12325. doi: 10.1002/eom2.12325) have shown that concentrated solution (4-10M) of LiFSI in 1,3-dioxolane (DOL) can initiate ring opening polymerization to form an efficient electrolyte. This document showed a stable cycling of the Li||NCM523 quasi-solid-state LMB at a capacity retention of 94% over 100 cycles.

The introduction of further functional additives, such as diethyl (2,2,2-trifluoroethyl) phosphite (DETFPi), and crosslinkers was also explored in the preparation solid polymeric electrolytes (J. Cui et al., Chemical Engineering Journal 461 (2023) 141973; P. Zhang et al., ACS Appl. Energy Mater. 2024, 7, 4088-4100). Nevertheless, such polymeric electrolytes exhibit low conductivity and poor rate capability in electrochemical cells.

On the other hand, the surface engineering strategy, particularly with organic polymer-containing coating materials has not been used extensively. Thus, there is a gap in lithium batteries' research that should be filled by devising new and efficient coating materials for electrodes.

### BRIEF DESCRIPTION OF THE INVENTION

To address the above-mentioned problems, the inventors have surprisingly found a coating method for stabilizing an electrode surface, particularly of a lithium anode, aiming at the practical, large-scale use of such coating layers in batteries. In particular, the inventors have found that *in-situ* polymerization of dioxolane (DOL-type) monomers in presence of suitable ring polymerization initiators, crosslinkers (specifically, comprising aromatic/heteroaromatic rings or a siloxane polymeric chain) and optional further additives onto an electrode surface is a promising strategy for electrode protection (specifically, for lithium anode) and thereby overcome the primary drawbacks of current coating materials (mechanical instability during cycling, potential impedance to lithium-ion transport, and effectiveness over long-term operation). The main advantages of the coating material described in the present application are fast lithium ions diffusion and high conductivity, high elastic modulus blocking dendrite formation, high flexibility, scalability (conventional spray coating and similar techniques can be used), controllable low thickness of the coating material (up to few µm), homogeneity on the electrode surface.

In particular, a first aspect is directed to a method for coating an electrode, preferably an anode, more preferably a lithium anode, said method comprising the polymerization of a mixture comprising:
- a first monomer of formula **I:** 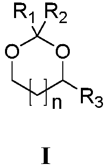 wherein:
   - R₁ and R₂ are independently selected from hydrogen, optionally fluorinated C1-C6 alkyl, and O(C1-C6 alkyl);
   - R₃ is selected from hydrogen, optionally fluorinated C1-C6 alkyl, polydimethylsiloxane, and polyethylene oxide; and
   - n is 0, 1, 2, or 3;
- optionally, a second monomer selected from the list consisting of cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes, preferably selected from: 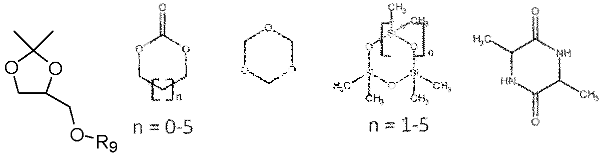 and a monomer of formula **I** other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi;
- a glycidyl crosslinker with general formula 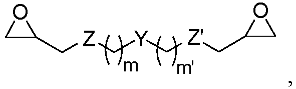 wherein:
   - Z and Z' are independently selected from O, S or 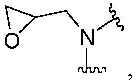 preferably Z = Z';
   - Y is one or more optionally substituted aromatic rings, one or more optionally substituted heteroaromatic rings or a siloxane polymeric chain;
   - m and m' being integers comprised between 0 and 6; and
- a ring-opening polymerization initiator.

A second aspect of the invention relates to a polymerizable mixture comprising:
- a first monomer of formula **I:** 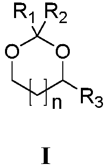 wherein:
   - R₁ and R₂ are independently selected from hydrogen, optionally fluorinated C1-C6 alkyl, and O(C1-C6 alkyl);
   - R₃ is selected from hydrogen, optionally fluorinated C1-C6 alkyl, polydimethylsiloxane, and polyethylene oxide, and
   - n is 0, 1, 2, or 3;
- optionally, a second monomer selected from the list consisting from cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes, preferably selected from: 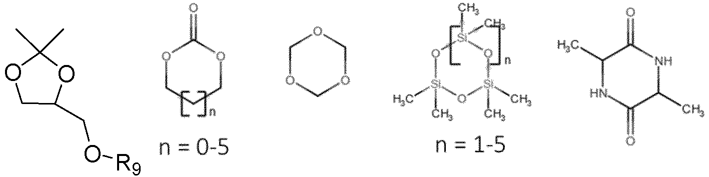 and a monomer of formula **I** other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi;
- a glycidyl crosslinker with general formula 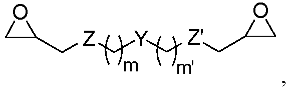 wherein:
   - Z and Z' are independently selected from O, S or 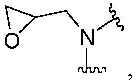 preferably Z=Z';
   - Y is one or more optionally substituted aromatic rings, one or more optionally substituted heteroaromatic rings or a siloxane polymeric chain;
   - m and m' being integers comprised between 0 and 6; and
- a ring-opening polymerization initiator.

Another aspect of the invention relates to a coating material obtained by the polymerization of the mixture of the method of the first or of the second aspect.

Another aspect relates to an electrode, preferably an anode, more preferably a lithium anode coated with the coating layer obtained by the polymerization of the mixture of the method of the first aspect or of the second aspect.

Yet, another aspect of the invention relates to an electrochemical cell comprising the electrode, preferably anode, more preferably lithium anode coated with the coating layer obtained by the polymerization of the mixture of the first and second aspect.

### DESCRIPTION OF THE FIGURES

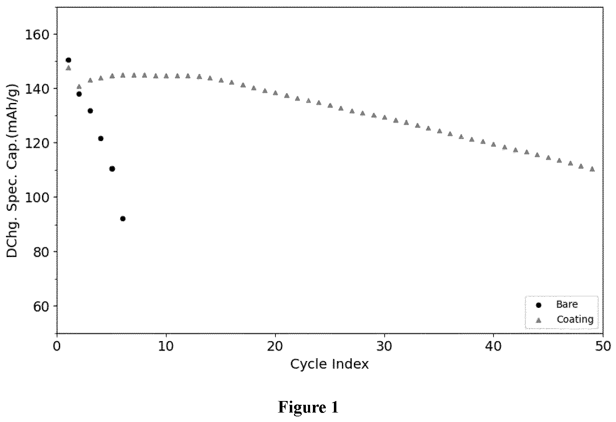

**Figure 1****.** LFP battery, cycling test. LiFePO₄ (LFP, Bay, areal capacity cathode: 3.0 mAh cm⁻²). Discharge specific capacity vs. cycle number for the Li||LFP cell, comparing bare Li metal anode (China Energy Lithium, 50um) and treated samples consisting of Li metal coated with the protection layer of example 1. Lean LP50 commercial electrolyte. Cycling conditions C/2 D/2, 45C.

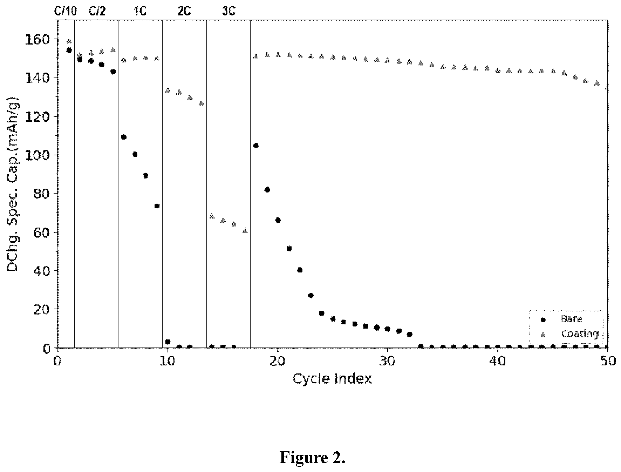

**Figure 2****.** LFP battery, C-rate test. LiFePO₄ (LFP, Bay, areal capacity cathode: 3.0 mAh cm⁻²). Discharge specific capacity vs. cycle number for the Li||LFP cell with lean LP50 commercial electrolyte, comparing bare Li metal anode (China Energy Lithium, 50um) and treated samples consisting of Li metal coated with the anode protection layer according to example 1. Lean LP50 commercial electrolyte.

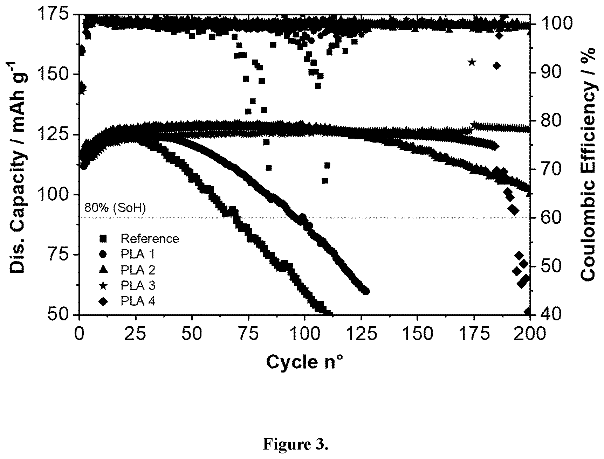

**Figure 3****.** Cycle number vs discharge capacity (left y axis) and coulombic efficiency vs discharge capacity (right y axis) for the cells with the different PLA compositions described in examples 4-6 *vs* bare Li metal ("Reference").

### DETAILED DESCRIPTION OF THE INVENTION

As already stated, a first aspect of the invention is directed to a method for coating an electrode, preferably an anode, more preferably a lithium anode, said method comprising the polymerization of a mixture comprising:
- a first monomer of formula **I:** 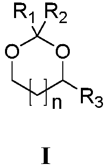 wherein:
   - R₁ and R₂ are independently selected from hydrogen, optionally fluorinated C1-C6 alkyl, and O(C1-C6 alkyl);
   - R₃ is selected from hydrogen, optionally fluorinated C1-C6 alkyl, polydimethylsiloxane, and polyethylene oxide, and
   - n is 0, 1, 2, or 3;
- optionally, a second monomer selected from the list consisting of cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes, preferably selected from: 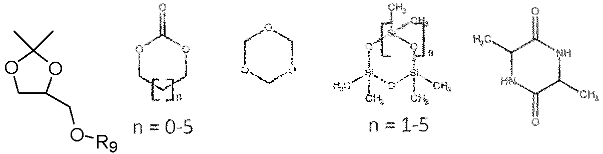 and a monomer of formula **I** other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi;
- a glycidyl crosslinker with general formula 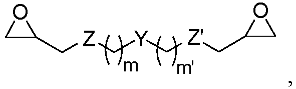 wherein:
   - Z and Z' are independently selected from O, S or 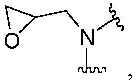 preferably Z=Z';
   - Y is one or more optionally substituted aromatic rings, one or more optionally substituted heteroaromatic rings or a siloxane polymeric chain;
   - m and m' being integers comprised between 0 and 6; and
- a ring-opening polymerization initiator.

The term "C1-C6 alkyl" as used herein refers to a linear or branched alkane derivative containing from 1 to 6 carbon atoms and which is bound to the rest of a molecule through a single bond. Illustrative examples include but are not limited to methyl, ethyl, propyl, butyl, pentyl, hexyl, isopropyl, sec-butyl, tert-butyl, neopentyl, isopentyl, and the like. Included within the definition of "Cl-C6 alkyl" are preferably the groups "C1-C4 alkyl", more preferably the groups "C1-C3 alkyl", even more preferably ethyl and ethyl, most preferably methyl. The same preferences apply to a group O(Cl-C6 alkyl). Likewise, a "fluorinated C1-C6 alkyl" denotes the C1-C6 alkyl groups, as described above, with at least one F atom replacing a hydrogen atom of the alkyl groups. Preferably, the C1-C6 fluorinated alkyl refers to a perfluorinated C1-C6 alkyl, more preferably to a CF₃ group.

Typical C1-C6 alkyl and O(C1-C6 alkyl) substituents include halogen, phenyl, and 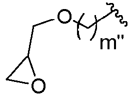 wherein m" is comprised between 0 and 6 (in each glycidyl group independently from the other).

A "polydimethylsiloxane" radical fragment refers to a -[Si(CH₃)₂O]ₘSi(CH₃)₂TG group, wherein m is an integer comprised between 2 and 20, preferably between 2 and 10, and TG is a terminal group according to the common knowledge in the art. Typical terminal groups are H, Me, OH and OMe.

A "polyethylene oxide" radical fragment refers to a -(CH₂CH₂O)ₘTG group, wherein m is comprised between 1 and 20, preferably between 1 and 10, and TG is a terminal group according to the common knowledge in the art. Typical terminal groups are H, Me, Et, OH, OMe, and OEt.

The term "halogen" refers to fluorine (F), chlorine (Cl), bromine (Br), iodine (I) substituents.

A "one or more optionally substituted aromatic rings" refers to one or more aromatic ring structures that may or may not have additional atoms or groups of atoms replacing one or more hydrogen atoms in the ring. Preferably, the one or more optionally substituted aromatic rings refer to 1 to 22 rings, more preferably 1 to 10, even more preferably 1 to 5, even more preferably 1, 2 or 3, most preferably 1 or 2. When more ring structures are present, these may be fused or connected by aliphatic chains, such as C1-C6 aliphatic chains, branched or linear (methylene, ethylene, isopropylene, and the like), ethylene oxide (-CH₂CH₂O-), propylene oxide (CH₂CH(CH₃)O-), glycerol linkers (where two oxygen atoms are connected to two different ring structures), O, O-O, S, S-S, and the like. Typical examples are diradicals originated from optionally substituted benzene or naphthalene rings, bisphenol A, among others. Typical substituents at the ring structures, if present, are optionally fluorinated C1-C6 alkyl, O(C1-C6 alkyl), halogen, phenyl, and 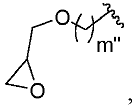 wherein m" is comprised between 0 and 6 (in each glycidyl group independently from the other).

A "one or more optionally substituted heteroaromatic rings" refers to one or more ring (mono- or polycyclic) aromatic structures that in addition to C and H atoms contains at least one heteroatom, said at least one heteroatom being preferably, N, O, Si, P and S, and may or may not have additional atoms or groups of atoms replacing one or more hydrogen atoms in the ring. Preferably, the one or more optionally substituted heteroaromatic rings refer to 1 to 22 rings, more preferably 1 to 10, even more preferably 1 to 5, even more preferably 1, 2 or 3, most preferably 1 or 2. When more ring structures are present, these may be fused or connected by aliphatic chains, such as C1-C6 aliphatic chains, branched or linear (methylene, ethylene, isopropylene, and the like), ethylene oxide (-CH₂CH₂O-), propylene oxide (CH₂CH(CH₃)O-), glycerol linkers (where two oxygen atoms are connected to two different ring structures), O, O-O, S, S-S, and the like. Typical substituents at the ring, if present, are optionally fluorinated C1-C6 alkyl, O(C1-C6 alkyl), halogen, phenyl, and 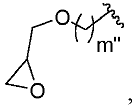 wherein m" is comprised between 0 and 6 (in each glycidyl group independently from the other).

A "siloxane polymeric chain" as used herein refers to a cyclic or linear polymeric backbone made up of repeating units comprising silicon and oxygen atoms. A typical cyclic siloxane polymeric chain is silsesquioxane. Alternatively, the siloxane polymeric chain is a linear chain with a C1-C6 alkyl or a phenyl attached to the silicon atoms. In preferred embodiments, the siloxane polymeric chain is linear and can be represented as:

[-Si(R)₂O-]ₙSi(R)₂-

where R is a C1-C6 alkyl (preferably methyl) or a phenyl and n is the number of repeating units, typically comprised between 2 and 20, preferably between 3 and 11.

In an embodiment, the first monomer of formula **I:** 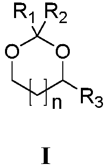 is characterized by:
- R₁ and R₂ being independently selected from hydrogen and optionally perfluorinated C1-C6 alkyl, more preferably from hydrogen and C1-C4 alkyl, even more preferably from hydrogen, methyl and ethyl;
- R₃ being selected from hydrogen and optionally perfluorinated C1-C6 alkyl, polydimethylsiloxane, and polyethylene oxide, more preferably from hydrogen and C1-C4 alkyl, even more preferably from hydrogen, methyl and ethyl; and
- n being 0 or 1.

In another embodiment, the first monomer of formula **I** is one of the following:

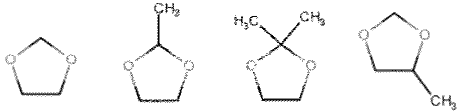

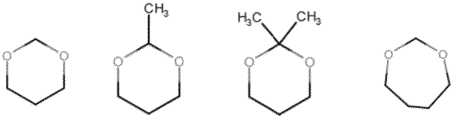

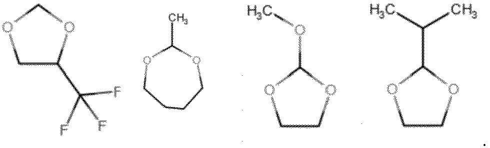

In a preferred embodiment, the first monomer is 1,3-dioxolane.

The mixture of the method of the first aspect optionally comprises a second monomer, selected from the list consisting of cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes.

More preferably the second monomer is selected from: 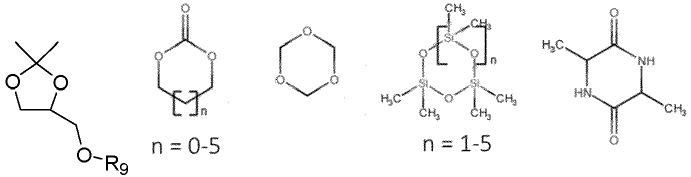 and a monomer of formula **I** other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi.

Preferably, the second monomer, if present, is a monomer of formula **I** other than the first monomer.

In a particular embodiment, when a second monomer is used, the first and second monomer can be co-polymerized or polymerized separately and blended. Preferably, the first and second monomer are co-polymerized.

The glycidyl crosslinker with general formula: 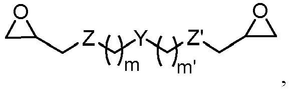 wherein Y, Z, Z', m and m' are defined as above, is characterized by two or more glycidyl groups that are susceptible of ring opening and may suitably crosslink with the first monomer.

In an embodiment, the glycidyl crosslinker comprises between 2 and 22 glycidyl groups. In a more particular embodiment, the glycidyl crosslinker comprised between 2 and 8 glycidyl groups. In a preferred embodiment, the glycidyl crosslinker comprises between 2 and 4 glycidyl groups, even more preferably comprises 2 glycidyl groups.

In an embodiment, m and m' in the glycidyl crosslinker are integers comprised between 0 and 3. In an embodiment, m and m' in the glycidyl crosslinker are independently 0 or 3. In an embodiment, m and m' in the glycidyl crosslinker are both 0. In another embodiment, m and m' in the glycidyl crosslinker are both 3.

In an embodiment, Z and Z' are the same. In another embodiment, Z and Z' are different. In an embodiment Z is O. In an embodiment Z' is O. In another embodiment Z is S. In another embodiment Z' is S. In yet another embodiment Z is 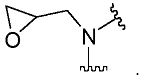 In yet another embodiment Z' is 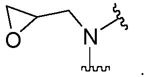 In a preferred embodiment Z is O or S. In a preferred embodiment Z' is O or S. In another preferred embodiment Z and Z' are different and independently selected from O, S or 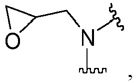 preferably from O or 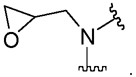 In another preferred embodiment, Z and Z' are both O. In a most preferred embodiment, Z and Z' are both O or Z is O and Z' is

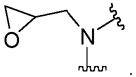

The nature of Y as defined above is particularly important in terms of properties of the final electrode coating. For example, crosslinkers containing one or more optionally substituted aromatic or heteroaromatic rings in their structure were found particularly advantageous as the final coating material after polymerization showed improved mechanical integrity and durability. On the other hand, a siloxane polymeric chain in the crosslinker is also advantageous due to the compatibility of the siloxane units with the electrodes, particularly with Li metal, thus improving cell performance.

In an embodiment, Y is selected from:
- a phenylene ring optionally substituted with at least one group selected from H, C1-C6 alkyl, OH, O(C1-C6 alkyl), halogen, and 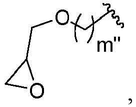 wherein m" is comprised between 0 and 3,
- two aromatic rings, fused or connected by a C1-C6 aliphatic chain, or
- a -[Si(Me)₂O]nSi(Me)₂- polymeric chain, wherein n is comprised between 2 and 20.

In an embodiment, Y is selected from:
- a phenylene ring optionally substituted with at least one group selected from H, C1-C6 alkyl, halogen, and 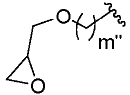 wherein m' is comprised between 0 and 3 or
- a [-Si(Me)₂O-]nSi(R)₂- polymeric chain, wherein n is comprised between 2 and 20.

In an embodiment, the glycidyl crosslinker with general formula: 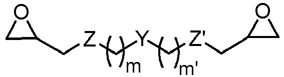 is characterized by:
- Z and Z' being independently selected from O, S or 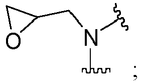
- Y being selected from:
   - a a phenylene ring optionally substituted with at least one group selected from H, C1-C6 alkyl, OH, O(C1-C6 alkyl), halogen, and 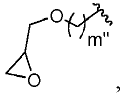
   - two aromatic rings, fused or connected by a C1-C6 aliphatic chain, or
   - a -[Si(Me)₂O]nSi(Me)₂- polymeric chain, wherein n is comprised between 2 and 20;
- m, m' and m" are integers being comprised between 0 and 3, preferably independently selected from 0 and 3.

In an embodiment, the glycidyl crosslinker with general formula: 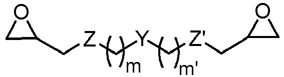 is characterized by:
- Z and Z' being O, S or 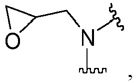 preferably Z = Z';
- Y being selected from a a phenylene ring optionally substituted with at least one group selected from H, C1-C6 alkyl, halogen, and 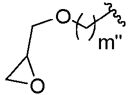 or a [-Si(Me)₂O-]nSi(R)₂- polymeric chain, wherein n is comprised between 2 and 20;
- m, m' and m" are integers being comprised between 0 and 3.

In a particular embodiment, the glycidyl crosslinker is one of the following: 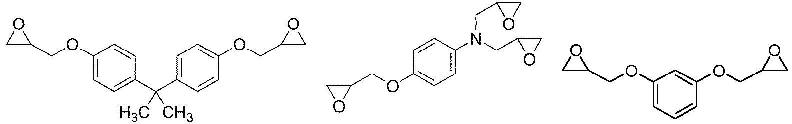 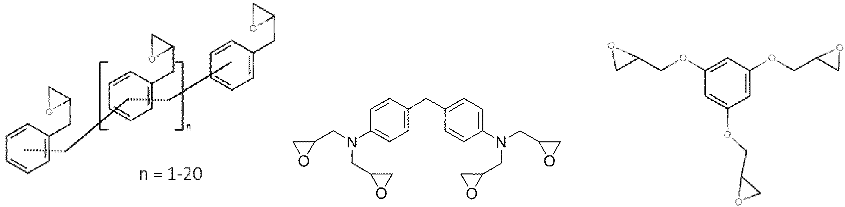 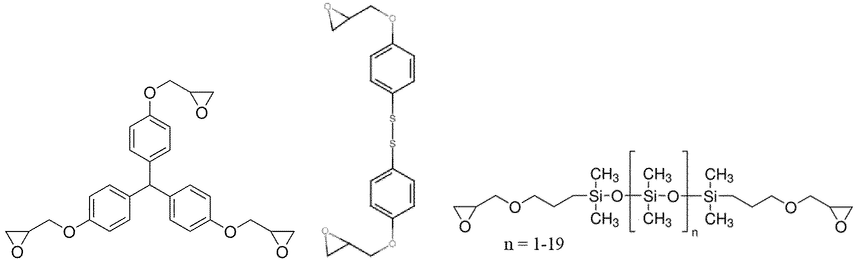 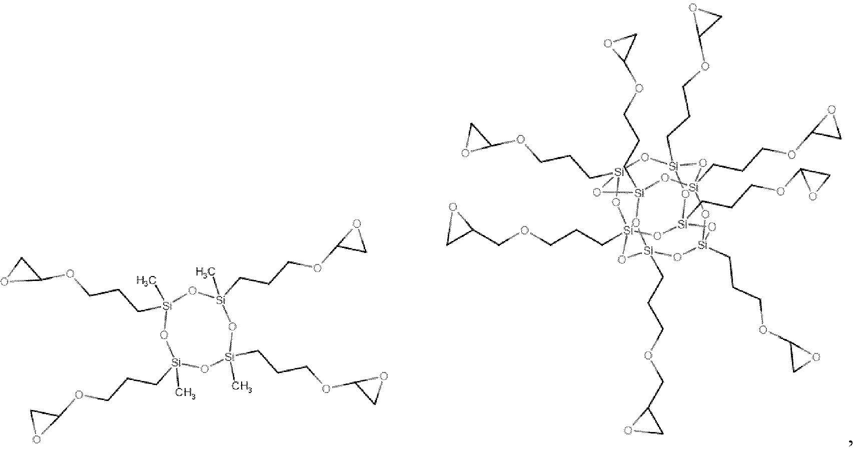 preferably one of the following:

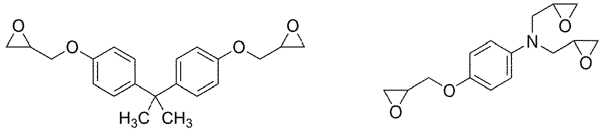

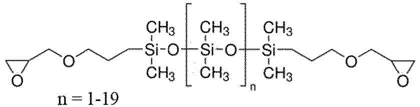

In a preferred embodiment, the glycidyl crosslinker is the poly(dimethylsiloxane) diglycidyl ether: 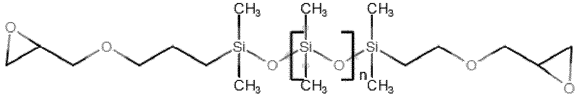 wherein the number of - [Si(Me)₂O]n- repeating units is comprised between 1 and 19, preferably between 2 and 10.

In an embodiment, the glycidyl crosslinker is found at a concentration of 0.001-10%vol in the mixture, preferably of 0.005-5%vol, more preferably of 0.01-1%vol.

The mixture of the method of the invention also comprises a polymerization initiator. Such initiator is a ring-opening polymerization (ROP) initiator, preferably is an organic lithium salt, a tin salt or a phosphazene. Many organic lithium salts are known in the art and a preferred list includes, but is not limited to, LiN(SO₂CF₃)₂ (LiTFSI), LiN(SO₂F)₂ (LiFSI), LiN(SO₂CF₃)(SO₂F), LiN(C₂F₅SO₂)(SO₂F) LiB(C₂O₄)₂, LiBF₄ , LiBF₂(C₂O₄), LiC(SO₂CF₃)₃, LiPF₃(C₂F₅)₃, LiCF₃SO₃, n-BuLi, MeLi, t-BuLi, LiOMe. Additional organic lithium salts are bifunctional salts comprising a lithium sulfonamide portion and and an acrylate or styrene moiety which is also susceptible of polymerization. Typical monomers include, but are not limited to, the following structures:

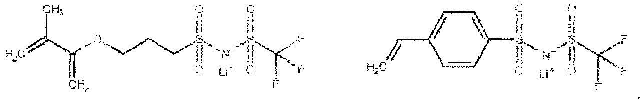

Nevertheless, such additional mixed initiators/monomers require thermal activation (preferably above 50 °C) and an additional radical initiator for olefin polymerization (such as AIBN).

Additionally, also ionic polymers may act as a polymerization initiator (and, optionally as crosslinkers).

In an embodiment, ionic polymers are selected from: 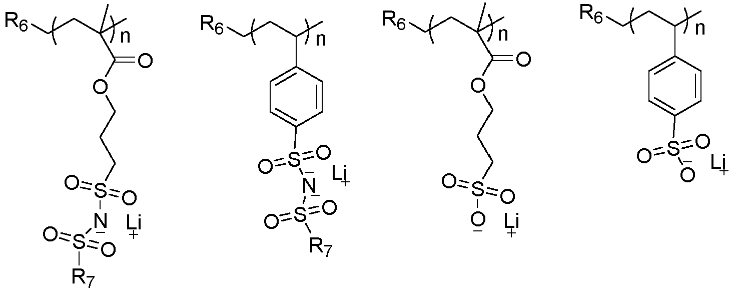 wherein:
- n = 1 to 100, preferably 1 to 50; 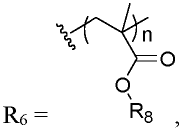 being R₈ selected from glycidyl, an ether polymeric chain, a siloxane polymeric chain, phenyl, naphthyl, 3,4-dihydroxyl benzyl, butyl, hexyl, ethyl hexyl, dodecyl, trifluoroethyl, cyanoethyl;
- R₇ = F, CF₃, CF₂H, or CH₂F.

When R₈ in the ionic polymers is a glycidyl, these polymers may simultaneously act as initiators and crosslinkers.

Preferred concentrations of the polymerization initiator in the mixture are comprised between 0.1M and 10M, preferably between 0.1 M and 5M, even more preferably between 0.1 and 2M.

Examples of tin salts include, but are not limited to, tin(II) 2-ethylhexanoate, SnCl₂, SnCl₄, Bu₂SnO, dibutyltin dilaurate, SnBr₂, tin(II) acetate. Examples of phosphazenes suitable for ROP include, but are not limited to, tert-butylimino-tris(dimethylamino)phosphorane, tert-butylimino-tris(dimethylamino)phosphorene, bis(2,2,2-trifluoroethyl)phosphazene, tert-butyl phosphazene, tert-butyl-substituted phosphazene, (tert-butylimino)tris(dimethylamino)phosphorene, cyclohexyl-substituted phosphazene, bis(triphenylphosphoranylidene)ammonium.

In a preferred embodiment, the polymerization initiator is a lithium organic salt selected from LiN(SO₂CF₃)₂, (LiTFSI), LiN(SO₂F)₂ (LiFSI), LiN(SO₂CF₃)(SO₂F), LiN(C₂F₅SO₂)(SO₂F), LiB(C₂O₄)₂, LiBF₄, LiBF₂(C₂O₄), LiC(SO₂CF₃)₃, LiPF₃(C₂F₅)₃, LiCF₃SO₃, most preferably is LiFSI.

In a particular embodiment, the mixture of the method of the first aspect comprises, preferably consists of:
- 1,3-dioxolane;
- a glycidyl crosslinker selected from: 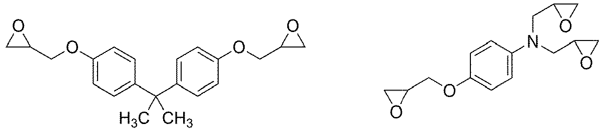 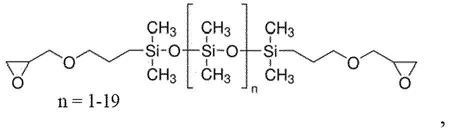 wherein n is comprised between 1 and 19, preferably is comprised between 1 and 10; and
- a lithium organic salt as ring-opening polymerization initiator selected from the list consisting of LiN(SO₂CF₃)₂, (LiTFSI), LiN(SO₂F)₂ (LiFSI), LiN(SO₂CF₃)(SO₂F), LiN(C₂F₅SO₂)(SO₂F), LiB(C₂O₄)₂, LiBF₄, LiBF₂(C₂O₄), LiC(SO₂CF₃)₃, LiPF₃(C₂F₅)₃, and LiCF₃SO₃.

In a particular embodiment, the mixture of the method of the first aspect comprises, preferably consists of:
- 1,3-dioxolane;
- a glycidyl crosslinker of formula: 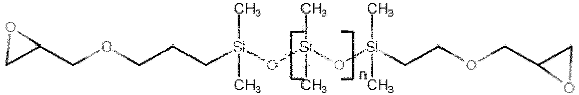 wherein n is comprised between 1 and 19, preferably between 1 and 10; and
- a lithium organic salt as ring-opening polymerization initiator selected from the list consisting of LiN(SO₂CF₃)₂, (LiTFSI), LiN(SO₂F)₂ (LiFSI), LiN(SO₂CF₃)(SO₂F), LiN(C₂F₅SO₂)(SO₂F), LiB(C₂O₄)₂, LiBF₄, LiBF₂(C₂O₄), LiC(SO₂CF₃)₃, LiPF₃(C₂F₅)₃, and LiCF₃SO₃.

In an embodiment, the mixture of the method of the first aspect further comprises a lithiophilic salt, which, in broader terms, comprises salts with a strong affinity for lithium ions of lithium ion batteries. Preferably, the lithiophilic salt is of formula M(X)_{z} where M is a metal cation M^{z+} selected from Bi, Sn, Cu, Al, Ca, Si, Ag, Au, Zn, Mg, In, K, Na, and Cs; X is an anion selected from Cl⁻, ClO₄⁻, NO₃⁻, BF₄⁻, AsF₆⁻, PF₆⁻, BF₃Cl⁻, F⁻, N(SO₂CF₃)₂⁻, N(SO₂F)₂⁻, N(SO₂CF₃)(SO₂F)⁻, N(C₂F₅SO₂)(SO₂F)⁻, B(C₂O₄)₂⁻, BF₂(C₂O₄)⁻, C(SO₂CF₃)₃⁻, PF₃(C₂F₅)₃⁻, CF₃SO₃⁻; and z is the cation valence.

Preferred concentrations of the lithiophilic salt above in the mixture are comprised between 0.000 1M to 1M, preferably between 0.001M and 0.5M, more preferably between 0.005M and 0.1M.

In an embodiment, the mixture of the method of the first aspect further comprises a capping agent, that is, a molecule used to terminate the polymer chain growing from the ROP process, preventing further propagation and thus "capping" the chain end and tuning the terminal group of the polymer instead of -OH. Examples include glycidyl-containing compounds with -NH₂, -Si(OCH₃)₃, -CHF₂, -CF₃, -CH₃, phenyl, sulfonate, -PO₃³⁻, -N₃ and the like. In a preferred embodiment the capping agent is selected from one of the following:

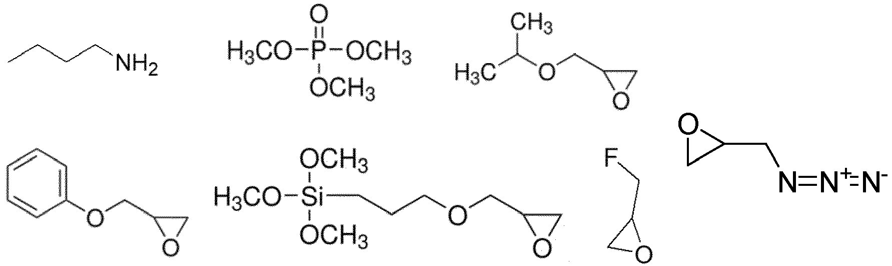

In an embodiment, the mixture of the method of the first aspect further comprises an additive selected from SEI-forming salts (such as LiNO₃, isosorbide nitrate, lithium 1,1,2,2,3,3-hexafluoropropane-1,3-disulfonimide, tris(2,2-difluoroethyl)borate, tris(trimethylsilyl) borate, tris(2,2-difluoroethyl) phosphate), shielding effect salts (such as alkali metal salt, preferably alkali metal nitrides), ionic liquids and plastic crystals (such as imidazolium salts, pyrrolidinium salts, piperidinium salts, alkoxy ethers combined with different anions like TFSI, FSI, BOB, succinonitrile, and the like), SEI-forming plasticizers (such as fluoroethylene carbonate, vinyl carbonate, fluorinated ethers, and the like), plasticizers (such as dimethyl methylphosphonate, tris(2,2,2-trifluoroethyl) phosphate, trimethyl phosphate, and the like), inorganic oxides particles (such as Al₂O₃, SiO₂, TiO₂, ZrO₂, ZnO, CaO, SnO, MgO, and the like), inorganic nitride particles (such as boron nitride), lithium-containing particles (such as Al-doped lithium lanthanum zirconium oxide (LLZO), lithium aluminum titanium phosphate (LATP), LiAlO₂, and the like), carbon particles (such as graphene oxide, carbon nanotubes, and the like), layered silicates particles, ceramic glasses particles(such as P₂O₅-glasses) or any combination thereof. Preferred size for the inorganic oxides particles, inorganic nitride particles, lithium-containing particles, carbon particles, layered silicate particles, and ceramic glasses particles are comprised between 1 nm and 10 µm, preferably between 10nm and 1 µm, more preferably between 20 nm and 500 nm. The amount of said particles is typically comprised between 0.01wt% - 50%wt, preferably between 0.1 - 20wt%, more preferably 1 and 10wt%.

Preferred concentrations for such additives in the mixture are comprised between 0.0001 to 1M, preferably between 0.001M and 0.5M, more preferably between 0.005M and 0.1M.

The polymerization of the method of the first aspect is preferably carried out *in situ* on the electrode. In a particular embodiment, the mixture of the method of the first aspect is applied to the electrode, preferably to the anode, more preferably to the lithium anode, by brush coat, spray coat, doctor blade, dipping or spincoat.

In an embodiment, the polymerization of the mixture takes place at a temperature comprised between 10 °C and 80 °C, more preferably between room temperature and 50 °C.

In an embodiment, the time for polymerization is comprised between 30 minutes and 24 hours, preferably between 1 hour and 18 hours.

As stated above, a second aspect of the invention relates to a polymerizable mixture comprising:
- a first monomer of formula I: 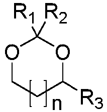 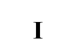 wherein:
   - R₁ and R₂ are independently selected from hydrogen, optionally fluorinated C1-C6 alkyl, and O(C1-C6 alkyl);
   - R₃ is selected from hydrogen, optionally fluorinated C1-C6 alkyl, polydimethylsiloxane, and polyethylene oxide, and
   - n is 0, 1, 2, or 3;
- optionally, a second monomer selected from the list consisting of cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes, preferably selected from: 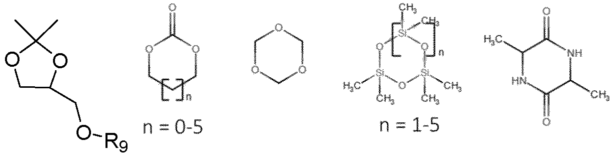 and a monomer of formula **I** other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi;
- a glycidyl crosslinker with general formula: 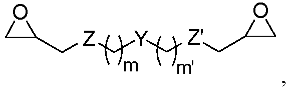 wherein
   - Z and Z' are independently selected from O, S or 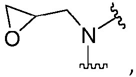 preferably Z = Z';
   - Y is one or more optionally substituted aromatic rings, one or more optionally substituted heteroaromatic rings or a siloxane polymeric chain;
   - m and m' being integers comprised between 0 and 6; and
- a ring-opening polymerization initiator.

All the embodiments related to the mixture of the method of the first aspect apply to the polymerizable mixture of the second aspect.

The invention further relates to a coating material obtained by the polymerization of the mixture of the second aspect and the mixture of the method of the first aspect. Such coating material is preferably obtained as a thin layer, that is, a layer with a thickness comprised between 0.1 and 50 micrometers, more preferably between 0.5 and 5 micrometers.

Another aspect relates to an electrode, preferably an anode, more preferably a lithium anode coated with the coating material obtained by the polymerization of the mixture of the method of the first aspect or the mixture of the second aspect. Such combination is particularly advantageous as the coating material provides a protecting layer preventing the formation of dendrites, thus increasing the lifespan of the lithium anode.

Lastly, another aspect of the invention relates to an electrochemical cell (also referred to as "electrochemical cell of the invention") comprising the electrode, preferably anode, more preferably lithium anode coated with the coating material obtained by the polymerization of the mixture of the method of the first aspect or the polymerizable mixture of the second aspect. In an embodiment, the electrochemical cell of the invention further comprises a liquid electrolyte.

In an embodiment, the electrochemical cell of the invention further comprises a LiFePO₄ cathode.

In a more particular embodiment, the electrochemical cell of the invention comprises a cathode consisting of LiFePO₄, conductive carbon and a binder, preferably a PVdF binder. The cathode preferably consists of 80-95 wt.% LiFePO₄, 2.5-10 wt.% conductive carbon and 2.5-10 wt.% a binder.

In a preferred configuration, the electrochemical cell of the invention comprises:
- an anode, preferably a lithium anode coated with the coating layer obtained by the polymerization of the mixture of the method of the first aspect or the polymerizable mixture of the second aspect;
- a cathode comprising, preferably consisting of LiFePO₄, Super C-65 conductive carbon PVdF;
- a liquid electrolyte; and
- optionally, a separator, preferably a polypropylene (PP) or a polypropylene-polyethylene (PP-PE-PP) separator.

### EXAMPLES

The following examples are intended to illustrate but not to limit the disclosed embodiments.

### Reagents and starting materials

The chemicals used in the example were purchased from Sigma-Aldrich and Thermo-Fisher and were dried under vacuum and/or with molecular sieves before use. Li metal foil (50 um thick) was purchased from China Energy Lithium and used as received. The separator (H2010) was either purchased from Celgard or it was a Whatman glass fiber separator. LiFSI was purchased from Nippon Shokubai. LP50 commercial electrolyte was purchased from Solvionic and used as received.

### Example 1. Lithium protective coating preparation

The preparation of the anode protection layer (PLA) consists in a first step of preparation of a 1,3-dioxolane (DOL) solution (1 mL) in which 0.99 mg poly(dimethylsiloxane) diglycidyl ether (Sigma Aldrich, average Mn ~800) were added in a concentration of 0.1% by volume. LiFSI salt (0.8418 g) was then added to the mixture in a concentration of 4.5M. The resulting mixture was left under stirring for few minutes at 300 rpm and room temperature. After this time, the solution appeared homogeneous and 6 mg of said solution was then coated on the Li metal foil in order to create a homogeneous coating on the surface of the lithium. To complete the polymerization and obtain a homogeneously crosslinked layer, the samples were left overnight under inert atmosphere at room temperature.

### Example 2: Preparation of electrochemical cells

Lithium metal batteries were prepared according to the following procedure:
Cathode preparation: LiFePO₄ (LFP, Bay) cathode active materials (AM) was composed of 96 wt.% of AM, 2 wt. % of conductive carbon (Super C-65), and 2 wt.% of polymeric binder (PVdF). The slurry was made using N-methyl-2-pyrrolidone (NMP) as solvent and after homogenization of the dispersion it was cast on an aluminum current collector with average loading of ca. 3.0 mAh cm⁻². The electrodes were calendared and dried overnight at 110 °C under vacuum.
Cell assembly: coin cells were assembled in an Argon filled glovebox using LFP (12 mm diameter) electrodes as cathode, LP50 commercial electrolyte (lean amount: 10uL), Celgard H2010 as separator and Li metal chip (China Energy Lithium, 14 mm diameter and 50 µm thickness) as anode with and without coating.

### Example 3. Cell Cycling

For cycling, the LFP cells were cycled galvanostatically between 2.8 V and 3.8 V vs. Li/Li+, using a Neware battery tester. The applied protocol was based on 1 formation cycle at a current of C/10, followed by constant current cycling at C/2-D/2 at 45 °C.

For C-rate tests of the PLA in LFP chemistry, the cells were cycled galvanostatically between 2.8 V and 3.8 V vs. Li/Li+, using a Neware battery tester. The applied protocol was based on 1 formation cycle at a current of C/10, followed by constant current cycling at different currents: 4x C/2 D/2, 4x 1C 1D, 4x 2C 2D, 4x 3C 3D, 40x C/2 D/2.

### Example 4. Lithium protective coating preparation for crosslinker validation

The preparation of the anode protection layer (PLA) consists in a first step of preparation of four separate 1,3-dioxolane (DOL) solutions (0.99 mL) in which 4 different crosslinkers were added (one crosslinker per solution) in an amount of 0.1 ml crosslinker in each solution: TPTE (Trimethylolpropane triglycidyl ether) - **PLA 1,** Bis A (Bisphenol A diglycidyl ether) - **PLA 2,** NGDA (N,N-Diglycidyl-4-glycidyloxyaniline) - **PLA3,** PDMS poly(dimethylsiloxane), diglycidyl ether terminated with Mw 800 g/mol - **PLA 4.** The crosslinker amount was set at 1% by volume for each of the four solutions. LiFSI salt (0.8418 g) was then added to the mixture in a concentration of 4. 5M. The resulting mixture was left under stirring for few minutes at 300 rpm and room temperature. After this time, the solution appeared homogeneous and 6 mg of said solution was then coated on the Li metal foil in order to create a homogeneous coating on the surface of the lithium. To complete the polymerization and obtain a homogeneously crosslinked layer, the samples were left overnight under inert atmosphere at room temperature.

### Example 5. Preparation of electrochemical cells with PLAs of example 4

Lithium metal batteries were prepared according to the following procedure.

Cathode preparation: LiFePO₄ (LFP, Bay) cathode active materials (AM) was composed of 96 wt.% of AM, 2 wt. % of conductive carbon (Super C-65), and 2 wt.% of polymeric binder (PVdF). The slurry was made using N-methyl-2-pyrrolidone (NMP) as solvent and after homogenization of the dispersion it was cast on an aluminum current collector with loading of ca. 2.5 mAh cm⁻² . The electrodes were calendared and dried overnight at 110 °C under vacuum.

Cell assembly: coin cells were assembled in an Argon filled glovebox using LFP (12 mm diameter) electrodes as cathode, LP50 commercial electrolyte (lean amount: 70uL), glass fiber as separator and Li metal chip (China Energy Lithium, 14 mm diameter and 50 µm thickness) as anode, with and without coating.

### Example 6. Cell Cycling

For cycling, the LFP cells were cycled galvanostatically between 2.8 V and 3.65 V vs. Li/Li+, using a Neware battery tester. The applied protocol was based on 1 formation cycle at a current of C/10, followed by constant current cycling at C/2-D/2 at 25 °C.

Figure 3 shows cycling data for cells containing different PLA coatings vs. bare Li metal ("Reference" curve). All PLA-containing samples have similar origin starting with activation cycles related with thick coating on top on Li metal separator type and temperature. **PLA 1** behaves in different way after about 30 cycles compared to **PLA 2** and **PLA 3** (similar over 125 cycles), at which point capacity and CE start dropping. Cells with **PLA 2** and **PLA 3** follow same pattern reaching more than 150 cycles without capacity fate. The origin of these differences comes from the type of crosslinkers applied in the PLA. The trimethylolpropane triglycidyl ether is structurally different compared to Bisphenol A diglycidyl ether and N,N-Diglycidyl-4-glycidyloxyaniline, both containing phenyl rings in their structure. By visual validation, the PLA with crosslinkers containing phenyl rings in the structure showed good mechanical integrity and durability comparing to the PLA formed starting from the trimethylolpropane triglycidyl ether (TPTE). A good performance was also surprisingly achieved by the cell containing a PLA formed starting from poly(dimethylsiloxane), diglycidyl ether terminated (PDMS) - **PLA 4** - which also structurally differs from the TPTE, Bisphenol A and NGDA. PDMS contains a polymeric siloxane chain incorporated in the PLA. Separation of crosslinkable glycidyl units by siloxane repeating units allowed to achieve an optimal coating composition as siloxane units were found compatible with Li metal and surprisingly improved cell performance compared to the PLA based on TPTE.

## Claims

1. - A method for coating an electrode, preferably an anode, preferably a lithium anode, said method comprising the polymerization of a mixture comprising:
- a first monomer of formula **I** 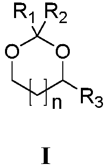 wherein:
- R₁ and R₂ are independently selected from hydrogen, optionally fluorinated C1-C6 alkyl, and O(C1-C6 alkyl);
- R₃ is selected from hydrogen, optionally fluorinated C1-C6 alkyl, polydimethylsiloxane, and polyethylene oxide; and
- n is 0, 1, 2, or 3;
- optionally, a second monomer selected from the list consisting of cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes, preferably selected from: 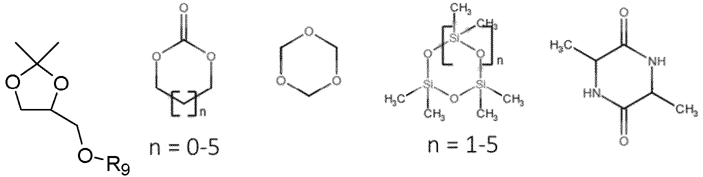 and a monomer of formula **I** other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi;
- a glycidyl crosslinker with general formula 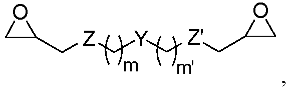 wherein:
- Z and Z' are independently selected from O, S or 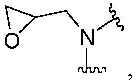 preferably Z=Z';
- Y is one or more optionally substituted aromatic rings, one or more optionally substituted heteroaromatic rings or a siloxane polymeric chain;
- m and m' are integers comprised between 0 and 6;
and
- a ring-opening polymerization initiator.

2. - The method according to claim 1, wherein the first monomer is one of the following: 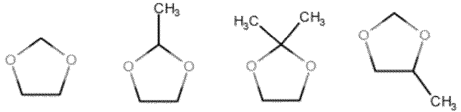 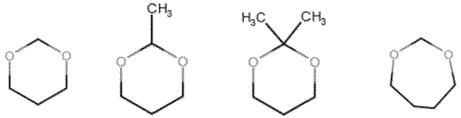 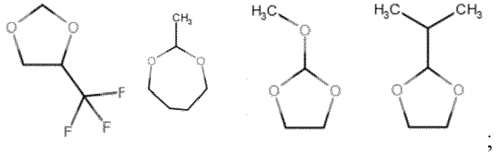 preferably wherein the first monomer is 1,3-dioxolane.

3. - The method according to claim 1 or 2, wherein the glycidyl crosslinker is **characterized by**:
- Z and Z' being independently selected from O, S or 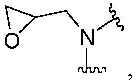 preferably Z=Z';
- Y being selected from:
- a a phenylene ring optionally substituted with at least one group selected from H, C1-C6 alkyl, OH, O(C1-C6 alkyl), halogen, and 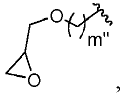
- two aromatic rings, fused or connected by a C1-C6 aliphatic chain, ,or
- a -[Si(Me)₂O]nSi(Me)₂- polymeric chain, wherein n is comprised between 2 and 20;
- m, m' and m" are integers being comprised between 0 and 3.

4. - The method according to any one of the preceding claims, wherein the glycidyl crosslinker is: 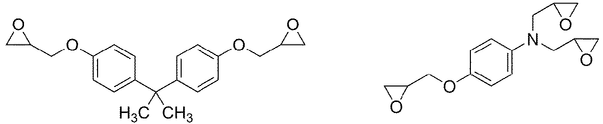 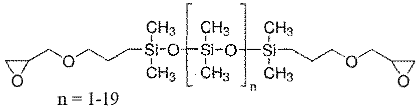 wherein n is comprised between 1 and 19, preferably between 2 and 10.

5. - The method according to any one of the preceding claims, wherein the ring-opening polymerization initiator is a lithium salt, preferably is a lithium organic salt selected from LiN(SO₂CF₃)₂, (LiTFSI), LiN(SO₂F)₂ (LiFSI), LiN(SO₂CF₃)(SO₂F), LiN(C₂F₅SO₂)(SO₂F), LiB(C₂O₄)₂, LiBF₄, LiBF₂(C₂O₄), LiC(SO₂CF₃)₃, LiPF₃(C₂F₅)₃, LiCF₃SO₃; more preferably is LiFSI.

6. - The method according to any one of the preceding claims, wherein the mixture further comprises a lithiophilic salt of formula M(X)_{z} where M is a metal cation M^{z+} selected from Bi, Sn, Cu, Ca, Si, Ag, Au, Zn, Mg, In, K, Na, and Cs; X is an anion selected from Cl⁻, ClO₄⁻, NO₃⁻, BF₄⁻, AsF₆⁻, PF₆⁻, BF₃Cl⁻, F⁻, N(SO₂CF₃)₂⁻, N(SO₂F)₂⁻, N(SO₂CF₃)(SO₂F) ⁻, N(C₂F₅SO₂)(SO₂F)⁻, B(C₂O₄)₂⁻, BF₂(C₂O₄) ⁻, C(SO₂CF₃)₃⁻, PF₃(C₂F₅)₃⁻, CF₃SO₃⁻; and sub-index z is the cation valence.

7. - The method according to any one of the preceding claims, wherein the mixture further comprises a capping agent which is a glycidyl compound with a group -NH₂, -Si(OCH₃)₃, -CHF₂, -CF₃, -CH₃, phenyl, sulfonate, or -PO₃³⁻.

8. - The method according to any one of the preceding claims, wherein the mixture further comprises an additive selected from a SEI-forming salt, a shielding effect salt, an ionic liquid, a plastic crystal, a SEI-forming plasticizer, a flame-retardant plasticizers or any combination thereof.

9. - The method according to anyone of the preceding claims, wherein the mixture is applied to the anode, preferably the lithium anode, by brush coat, spray coat, doctor blade, dipping or spincoat.

10. - The method according to anyone of the preceding claims, wherein the polymerization takes place at a temperature comprised between 10 °C and 80 °C and the time for polymerization is comprised between 30 minutes and 24 hours.

11. - The method according to any one of claims 1 to 5 wherein the mixture consists of:
- 1,3-dioxolane;
- a glycidyl crosslinker selected from: 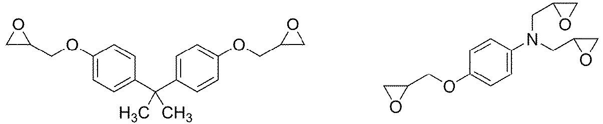 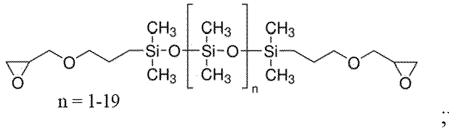 wherein n is preferably comprised between 1 and 10; and
- a lithium organic salt as ring-opening polymerization initiator selected from the list consisting of LiN(SO₂CF₃)₂, (LiTFSI), LiN(SO₂F)₂ (LiFSI), LiN(SO₂CF₃)(SO₂F), LiN(C₂F₅SO₂)(SO₂F), LiB(C₂O₄)₂, LiBF₄, LiBF₂(C₂O₄), LiC(SO₂CF₃)₃, LiPF₃(C₂F₅)₃, and LiCF₃SO₃.

12. - A polymerizable mixture comprising:
- a first monomer of formula **I** 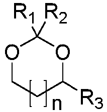 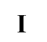 wherein:
- R₁ and R₂ are independently selected from hydrogen, optionally fluorinated C1-C6 alkyl, and O(C1-C6 alkyl);
- R₃ is selected from hydrogen, optionally fluorinated C1-C6 alkyl, polydimethylsiloxane, and polyethylene oxide; and
- n is 0, 1, 2, or 3;
- optionally, a second monomer selected from the list consisting of cyclic or linear carbonates, cyclic or linear siloxanes, anhydrides, lactones, lactams, sultones, cyclic or linear ethers, spiro compounds, cyclic or linear sulfonamides, cyclic or linear amines, and oxathiolanes, preferably selected from: 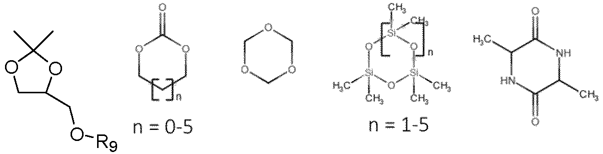 and a monomer of formula I other than the first monomer, wherein R₉ is C1-C6 alkyl, polydimethylsiloxane, polyethylene oxide, CH₂CF₂H, CH₂CH₂CH₂S(O)₂NS(O)₂CF₃Li, CH₂CH₂CH₂S(O)₂NS(O)₂CF₂HLi, CH₂CH₂CH₂S(O)₂NS(O)₂FLi;
- a glycidyl crosslinker with general formula 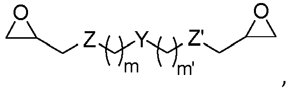 wherein:
- Z and Z' are independently selected from O, S or 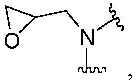 preferably Z=Z';
- Y is one or more optionally substituted aromatic rings, one or more optionally substituted heteroaromatic rings or a siloxane polymeric chain;
- m and m' are integers comprised between 0 and 6; and
- a ring-opening polymerization initiator.

13. - A coating material obtained by the polymerization of the mixture of the method according to any one of claims 1 to 11 or the polymerizable mixture of claim 12.

14. - An anode, preferably a lithium anode, coated with the coating material as defined in claim 13.

15. - An electrochemical cell comprising the coating material according to claim 13 or the anode according to claim 14.
